(19) Europäisches Patentamt

European Patent Office

Office européen des brevets

(11) EP 4 752 517 A1

(12) **EUROPEAN PATENT APPLICATION**
published in accordance with Art. 153(4) EPC

(43) Date of publication:
03.06.2026 Bulletin 2026/23

(21) Application number: 24845352.4

(22) Date of filing: 04.07.2024

(51) International Patent Classification (IPC):
$G01M\ 13/04^{(2019.01)}$      $F16C\ 19/06^{(2006.01)}$
$F16C\ 19/52^{(2006.01)}$

(52) Cooperative Patent Classification (CPC):
F16C 19/06; F16C 19/52; G01M 13/04

(86) International application number:
PCT/JP2024/024199

(87) International publication number:
WO 2025/022971 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 JP 2023120862

(71) Applicant: NTN Corporation
Osaka-shi Osaka 530-0005 (JP)

(72) Inventor: EGAWA Kouhei
Kuwana-shi, Mie 511-0867 (JP)

(74) Representative: Eder Schieschke & Partner mbB
Patentanwälte
Elisabethstraße 34
80796 München (DE)

(54) **METHOD FOR ESTIMATING ROLLING VISCOSITY RESISTANCE, SYSTEM FOR ESTIMATING ROLLING VISCOSITY RESISTANCE, PROGRAM FOR ESTIMATING ROLLING VISCOSITY RESISTANCE, AND COMPUTER-READABLE RECORDING MEDIUM IN WHICH SAID PROGRAM IS RECORDED**

(57) A rolling bearing 1 includes raceway surfaces 11a and 12a and a rolling element 13 that rolls on the raceway surfaces. The rolling bearing 1 includes: a contact portion where the raceway surface and the rolling element are in point contact with each other, an oil film is formed at a portion of the point contact, and the raceway surfaces 11a and 12a are in contact with the rolling element 13; and a non-contact portion that is not in contact with the rolling element. An estimated value $F_{r,w}$ of rolling viscosity resistance is calculated from a regression equation, in which a calculation range of a contact ellipse in a major axis direction is set to a length selected within a range exceeding a major axis radius of the contact ellipse and equal to or less than an axial equivalent radius.

FIG. 2

**Description**

TECHNICAL FIELD

The present invention relates to a method for estimating rolling viscosity resistance in a rolling bearing, a system for estimating rolling viscosity resistance, a program for estimating rolling viscosity resistance, and a computer-readable recording medium in which the program is recorded.

BACKGROUND ART

A main purpose of lubrication in rolling bearings is to reduce friction and prevent damage by creating an oil film between elements. In a normally lubricated rolling bearing, an elasto-hydrodynamic lubrication (EHL) oil film is formed between a raceway surface and a rolling element to separate two surfaces, to prevent surface damage in an early stage. The oil film is preferably thick from the viewpoint of preventing surface damage, but this is not the case from the viewpoint of low friction which is one of important performance indexes of the rolling bearing. Under the condition that the oil film is thick, resistance due to viscosity of oil when a fluid flows into a contact surface increases. This resistance is called rolling viscosity resistance.

Estimating magnitude of the rolling viscosity resistance is an important issue in design or performance evaluation of the rolling bearing. In order to estimate the rolling viscosity resistance with high accuracy, in past studies, a regression equation of the rolling viscosity resistance is constructed by performing calculation with EHL analysis around a contact point between a ball and a bearing ring. In constructing the regression equation, it is known that a calculation range of the rolling viscosity resistance is set to a range of a contact ellipse or a range of major axis radii on both axial sides centered on the contact ellipse (Non Patent Literature 1).

CITATIONS LIST

NON-PATENT LITERATURE

Non Patent Literature 1: N. Biboulet and L. Houpert, Hydrodynamic force and moment in pure rolling lubricated contacts. Part 1: point contacts, J. Eng. Tribol., 224,8(2010), 777-788

SUMMARY OF INVENTION

TECHNICAL PROBLEMS

However, in the analysis of Non Patent Literature 1, since the calculation range of the rolling viscosity resistance is narrower than that of an actual bearing, the rolling viscosity resistance in the actual bearing is underestimated. This is because the calculation range in the axial direction is limited to the range of the contact ellipse or the like in Non Patent Literature 1, whereas, in a bearing under sufficient lubrication, a space between the ball and the bearing ring is filled with oil, and thus the rolling viscosity resistance is generated not only in the contact portion where the raceway surface and the rolling element are in contact with each other (region where the contact ellipse is formed) but also in a non-contact portion which is a region on an axial outer side of the contact ellipse in a width of the raceway surface. Therefore, the calculated value of Non Patent Literature 1 tends to deviate from the rolling viscosity resistance value of the actual bearing.

Therefore, an object of the present invention is to provide a method, a system, and a program for estimating rolling viscosity resistance and capable of estimating the rolling viscosity resistance in an actual bearing with high accuracy, and a computer-readable recording medium in which the program is recorded.

SOLUTIONS TO PROBLEMS

In order to solve the above problem, a method for estimating rolling viscosity resistance according to the present invention is a method for estimating rolling viscosity resistance of a rolling bearing including a raceway surface and a rolling element that rolls on the raceway surface, the rolling bearing includes: a contact portion where the raceway surface and the rolling element are in point contact with each other, an oil film is formed at a portion of the point contact, and the raceway surface is in contact with the rolling element; and a non-contact portion that is not in contact with the rolling element, and the method includes: calculating an estimated value $F_{r,w}$ of rolling viscosity resistance from a regression equation, in which a calculation range of a contact ellipse in a major axis direction is set to a length selected within a range exceeding a major axis radius of the contact ellipse and equal to or less than an axial equivalent radius.

In this method for estimating rolling viscosity resistance, a regression equation of rolling viscosity resistance can be determined for each of the contact portion and the non-contact portion, and a sum of values calculated based on the respective regression equations can be used as the estimated value Fr,w of rolling viscosity resistance of the rolling bearing.

In this method for estimating rolling viscosity resistance, the estimated value Fr,w can be calculated from an equation below:

[Mathematical Formula 26]

$$F_{r,w} = 3.44U'^{0.696}G^{1.07}W'^{0.442}k^{0.578} + 2.88U'^{0.892}\left(R_y / R_x\right)^2\left\{2 - \exp\left(-1.01L_{\text{left}}^{0.764}\right) - \exp\left(-1.01L_{\text{right}}^{0.764}\right)\right\}$$

where,
[Mathematical Formula 7]

$$U = \frac{\eta_0 u}{E'R_x} \tag{7}$$

[Mathematical Formula 8]

$$W = \frac{w}{E'R_x^2} \tag{8}$$

[Mathematical Formula 9]

$$G = \alpha E' \tag{9}$$

[Mathematical Formula 13]

$$U' = \frac{\eta_0 u \alpha}{R_x} \tag{13}$$

[Mathematical Formula 14]

$$L = \frac{R_x\sqrt{R_x\left(l - a\right)}}{R_y^2} \tag{14}$$

where $\eta_0$ represents a normal pressure viscosity [Pa·s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

In this method for estimating rolling viscosity resistance, the regression equation of the contact portion can be multiplied by a thermal correction coefficient.

Further, a system for estimating rolling viscosity resistance according to the present invention is a system for estimating rolling viscosity resistance of a rolling bearing including a raceway surface and a rolling element that rolls on the raceway surface, the rolling bearing includes: a contact portion where the raceway surface and the rolling element are in point contact with each other, an oil film is formed at a portion of the point contact, and the raceway surface is in contact with the rolling element; and a non-contact portion that is not in contact with the rolling element, and the system includes: a calculation unit configured to calculate an estimated value Fr,w of rolling viscosity resistance from a regression equation, in which a calculation range of a contact ellipse in a major axis direction is set to a length selected within a range exceeding a major axis radius of the contact ellipse and equal to or less than an axial equivalent radius; and an output unit configured to output the estimated value Fr,w.

In this system for estimating rolling viscosity resistance, a regression equation of rolling viscosity resistance can be determined for each of the contact portion and the non-contact portion, and a sum of values calculated based on the respective regression equations can be used as the estimated value Fr,w of rolling viscosity resistance of the rolling bearing.

In this system for estimating rolling viscosity resistance, the estimated value Fr,w can be calculated from an equation below:

[Mathematical Formula 26]

$$F_{r,w} = 3.44 U^{0.696} G^{1.07} W^{0.442} k^{0.578} + 2.88 U'^{0.892} \left( R_y / R_x \right)^2 \left\{ 2 - \exp\left(-1.01 L_{\text{left}}^{0.764}\right) - \exp\left(-1.01 L_{\text{right}}^{0.764}\right) \right\}$$

where,
[Mathematical Formula 7]

$$U = \frac{\eta_0 u}{E' R_x} \tag{7}$$

[Mathematical Formula 8]

$$W = \frac{w}{E' R_x^2} \tag{8}$$

[Mathematical Formula 9]

$$G = \alpha E' \tag{9}$$

[Mathematical Formula 13]

$$U' = \frac{\eta_0 u \alpha}{R_x} \tag{13}$$

[Mathematical Formula 14]

$$L = \frac{R_x \sqrt{R_x (1 - a)}}{R_y^2} \tag{14}$$

where $\eta_0$ represents a normal pressure viscosity [Pa-s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

In this system for estimating rolling viscosity resistance, the regression equation of the contact portion can be multiplied by a thermal correction coefficient.

In addition, a program for estimating rolling viscosity resistance according to the present invention is a program for estimating rolling viscosity resistance of a rolling bearing including a raceway surface and a rolling element that rolls on the raceway surface, the rolling bearing includes: a contact portion where the raceway surface and the rolling element are in point contact with each other, an oil film is formed at a portion of the point contact, and the raceway surface is in contact with the rolling element; and a non-contact portion that is not in contact with the rolling element, and the program causes a computer to execute: processing of calculating an estimated value Fr,w of rolling viscosity resistance from a regression equation, in which a calculation range of a contact ellipse in a major axis direction is set to a length selected within a range exceeding a major axis radius of the contact ellipse and equal to or less than an axial equivalent radius; and processing of outputting the estimated value Fr,w.

In this program for estimating rolling viscosity resistance, a regression equation of rolling viscosity resistance can be determined for each of the contact portion and the non-contact portion, and a sum of values calculated based on the respective regression equations can be used as the estimated value Fr,w of rolling viscosity resistance of the rolling bearing.

Further, in this program for estimating rolling viscosity resistance, the estimated value Fr,w can be calculated from an equation below:

[Mathematical Formula 26]

$$F_{r,w} = 3.44 U'^{0.696} G'^{1.07} W'^{0.442} k^{0.578} + 2.88 U'^{0.892} \left( R_y / R_x \right)^2 \left\{ 2 - \exp\left(-1.01 L_{left}^{0.764}\right) - \exp\left(-1.01 L_{right}^{0.764}\right) \right\}$$

where,
[Mathematical Formula 7]

$$U = \frac{\eta_0 u}{E' R_x} \tag{7}$$

[Mathematical Formula 8]

$$W = \frac{w'}{E' R_x^2} \tag{8}$$

[Mathematical Formula 9]

$$G = \alpha E' \tag{9}$$

[Mathematical Formula 13]

$$U' = \frac{\eta_0 u \alpha}{R_x} \tag{13}$$

[Mathematical Formula 14]

$$L = \frac{R_x \sqrt{R_x (1 - a)}}{R_y^2} \tag{14}$$

where $\eta_0$ represents a normal pressure viscosity [Pa·s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

In this program for estimating rolling viscosity resistance, the regression equation of the contact portion can be multiplied by a thermal correction coefficient.

The program for estimating rolling viscosity resistance described above may be recorded in a computer-readable recording medium.

ADVANTAGEOUS EFFECTS OF INVENTION

According to the present invention, rolling viscosity resistance in an actual bearing can be estimated with high accuracy.

BRIEF DESCRIPTION OF DRAWINGS

FIG. 1 is a cross-sectional view of a ball bearing according to the present embodiment.
FIG. 2 is a developed view of a raceway surface illustrating an analysis range and an integration range to be used for EHL analysis.
FIG. 3 is a table illustrating calculation control parameters.

FIG. 4 is a table illustrating calculation conditions (bearing model number 6320).

FIG. 5 is a table illustrating calculation conditions (bearing model number 6210).

FIG. 6 is a table illustrating calculation conditions (bearing model number 6004).

FIG. 7 is a table illustrating physical property values of materials used for calculation.

FIG. 8 is a table illustrating physical property values of lubricating oil used for calculation.

FIG. 9A is a diagram illustrating an oil film pressure and an oil film thickness distribution with y = 0 mm.

FIG. 9B is an enlarged view illustrating a region of x = ±0.4 mm in FIG. 9A.

FIG. 10 is a diagram illustrating an oil film pressure and an oil film thickness distribution with y = 3mm.

FIG. 11 is a diagram illustrating rolling viscosity resistance per unit length and an oil film thickness distribution with x = 0 mm.

FIG. 12A is a diagram illustrating changes in oil film pressure distribution and pressure generation position with y = 0 mm due to an average speed change.

FIG. 12B is an enlarged view illustrating a region of x = ±0.4 mm in FIG. 12A.

FIG. 13A is a diagram illustrating changes in oil film pressure distribution and pressure generation position with y = 0 mm due to a load change.

FIG. 13B is an enlarged view illustrating a region of x = ±0.4 mm in FIG. 13A.

FIG. 14A is a diagram illustrating changes in oil film pressure distribution and pressure generation position with y = 0 mm due to an axial equivalent radius change.

FIG. 14B is an enlarged view illustrating a region of x = ±0.4 mm in FIG. 14A.

FIG. 15 is a diagram illustrating changes in oil film pressure distribution and pressure generation position with y = 3 mm due to an average speed change.

FIG. 16 is a diagram illustrating changes in oil film pressure distribution and pressure generation position with y = 3mm due to a load change.

FIG. 17 is a diagram illustrating changes in oil film pressure distribution and pressure generation position with y = 3mm due to an axial equivalent radius change.

FIG. 18A is a diagram illustrating an influence of a dimensionless parameter (dimensionless speed parameter U) on dimensionless rolling viscosity resistance Fr,c of the contact portion.

FIG. 18B is a diagram illustrating an influence of a dimensionless parameter (dimensionless load parameter W) on the dimensionless rolling viscosity resistance Fr,c of the contact portion.

FIG. 18C is a diagram illustrating an influence of a dimensionless parameter (location-free material parameter G) on the dimensionless rolling viscosity resistance Fr,c of the contact portion.

FIG. 18D is a diagram illustrating an influence of a dimensionless parameter (contact ellipse ratio $\kappa$) on the dimensionless rolling viscosity resistance Fr,c of the contact portion.

FIG. 19 is a table illustrating initial values to be used for searching for optimum values of constants.

FIG. 20 is a table illustrating a result of searching for optimum values of constants.

FIG. 21 is a diagram illustrating an influence of a dimensionless speed parameter U' on a dimensionless rolling viscosity resistance Fr,nc of a non-contact portion.

FIG. 22 is a diagram illustrating an influence of a dimensionless shape parameter L on the dimensionless rolling viscosity resistance Fr,nc of the non-contact portion.

FIG. 23 is a table illustrating initial values to be used for searching for optimum values of constants.

FIG. 24 is a table illustrating a result of searching for optimum values of constants.

FIG. 25 is a table illustrating use ranges of dimensionless parameters.

FIG. 26 is a diagram illustrating a relative error distribution between an analysis value and a calculated value of Fr,c.

FIG. 27 is a diagram illustrating a relative error distribution between an analysis value and a calculated value of Fr,w.

## DESCRIPTION OF EMBODIMENT

Hereinafter, an embodiment of the present invention will be described in detail with reference to the drawings.

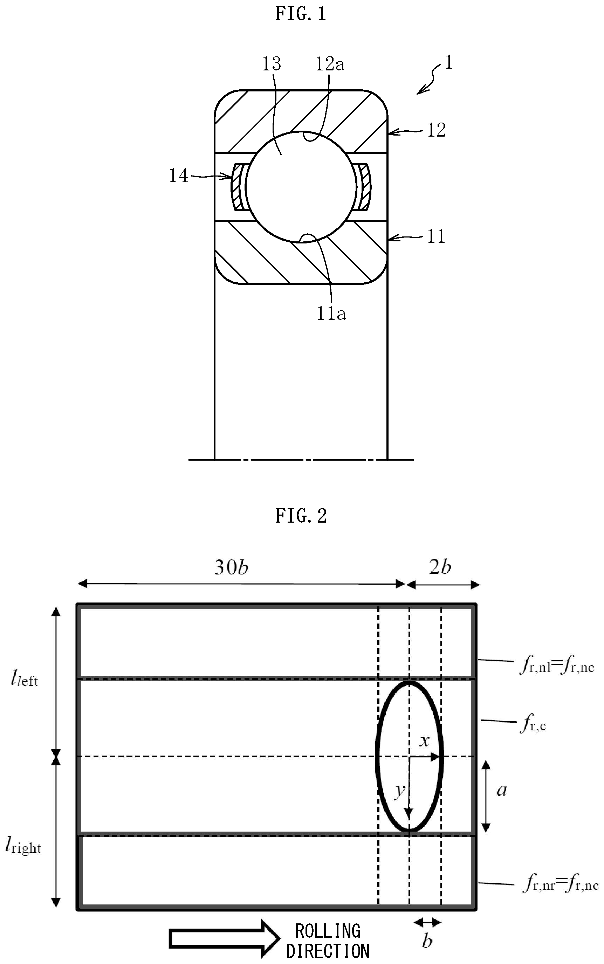

FIG. 1 is a cross-sectional view illustrating a ball bearing 1 which is one type of rolling bearing. The ball bearing 1 includes an inner ring 11 having an inner-ring raceway surface 11a on an outer peripheral surface, an outer ring 12 having an outer-ring raceway surface 12a on an inner peripheral surface, a plurality of rolling elements (balls) 13 rollably interposed between the inner-ring raceway surface 11a and the outer-ring raceway surface 12a, and a retainer 14 that holds the rolling elements 13 at predetermined intervals in a bearing circumferential direction. An oil film is formed between the rolling element 13 and the raceway surfaces 11a and 12a of the ball bearing by lubricating oil supplied into the bearing.

In the ball bearing 1, the inner-ring raceway surface 11a and the outer-ring raceway surface 12a are processed such that curvature radii thereof are very slightly larger than a curvature radius of the ball 13. Therefore, the inner-ring raceway surface 11a and the ball 13, and the outer-ring raceway surface 12a and the ball 13 are all in point contact. A portion of the point contact has an elliptical shape (referred to as a contact ellipse) due to elastic deformation of the raceway surface and the ball. A size of the contact ellipse can be obtained by contact analysis based on Hertz's elastic contact theory or semi-infinite elastic body approximation.

The present invention makes it possible to estimate a value of rolling viscosity resistance in a bearing, which is important information in design or performance evaluation of the rolling bearing as described above, with high accuracy from a regression equation. Hereinafter, a derivation process of the regression equation will be described.

Definitions of symbols used in the following description are listed below.

$a$: Major axis radius [m] of contact ellipse

$a_1$ to $a_5$: Constant of dimensionless rolling viscosity resistance equation

$b$: Minor axis radius [m] of contact ellipse

$b_1$ to $b_5$: Constant of dimensionless rolling viscosity resistance equation

$E'$: Equivalent Young's modulus [Pa]

$F_r$: Dimensionless rolling viscosity resistance

$f_r$: Rolling viscosity resistance [N]

$f_t$: Rolling viscosity resistance [N] in consideration of thermal correction coefficient

$G$: Dimensionless material parameter

$h_\infty$: Gap [m]

$h_c$: Central oil film thickness [m]

$\kappa$: Contact ellipse ratio = $a/b$

$L$: Dimensionless shape parameter

$l$: Distance [m] in y direction from center of contact ellipse to end of analysis region

$p$: Pressure Pa

$R_x$: Equivalent radius [m] in x direction

$R_y$: Equivalent radius [m] in y direction

$U$: Dimensionless speed parameter

$U'$: Dimensionless speed parameter of non-contact portion

$u$: Average speed [m/s]

$W$: Dimensionless load parameter

$w$: Load [N]

$x$: Coordinates [m] in rolling direction

$y$: Coordinates [m] in direction orthogonal to rolling direction

$\alpha$: Viscosity-pressure coefficient [$Pa^{-1}$]

$\varphi_t$: Thermal correction coefficient

$\eta_0$: Normal pressure viscosity [Pa·s] of lubricating oil

[Subscript]

c: Contact portion

nc: Non-contact portion

left: Left side from center of analysis region

right: Right side from center of analysis region

nl: Left side of non-contact portion

nr: Right side of non-contact portion

w: Entire analysis region

Note that an equivalent radius R is obtained from $R = R_1 \times R_2/(R_1 + R_2)$ where a radius of the rolling element (ball) is $R_1$ and a radius of the raceway surface is $R_2$. The equivalent Young's modulus $E'$ is obtained from $2/E' = (1 - v_1^2)/E_1 + (1 - v_2^2)/E_2$ where a Young's modulus of the ball is $E_1$, a Poisson's ratio of the ball is $v_1$, an elastic modulus of a bearing ring is $E_2$, and a Poisson's ratio of the bearing ring is $v_2$.

Hereinafter, an oil film pressure and an oil film thickness distribution in the analysis region are obtained by isothermal EHL analysis. In this analysis, the Roelands equation has been used as a relational expression between viscosity and pressure, and the Wu-Klaus-Duda equation has been used as a viscosity-pressure coefficient. A multi-level method is used for a numerical analysis algorithm.

FIG. 2 illustrates an analysis range and an integration range used for EHL analysis, and is a developed view in which one raceway surface (for example, the inner raceway surface 11a) of the bearing is developed on a plane. As illustrated in FIG. 2, a contact ellipse is formed on the raceway surface by contact with the rolling element. In FIG. 2, an x direction is a direction in which the rolling element rolls, and a y direction (a major axis direction of the contact ellipse) orthogonal to the x direction corresponds to an axial direction in a radial rolling bearing and corresponds to a radial direction in a thrust rolling bearing. Hereinafter, a method of calculating rolling viscosity resistance will be described.

Since the rolling viscosity resistance $f_r$ is shear resistance of lubricating oil due to a Poiseuille flow in the rolling direction, the rolling viscosity resistance $f_r$ is expressed by

[Mathematical Formula 1]

$$f_r = \frac{1}{2} \int_{-\infty}^{\infty} \int_{-\infty}^{\infty} (h_\infty - h_c) \frac{\partial p}{\partial x} dx dy \tag{1}$$

In order to calculate the rolling viscosity resistance by using Equation (1), it is necessary to define an integration range. In the present embodiment, the integration range in the x direction is from -30b to 2b. This is because the rolling viscosity resistance is substantially saturated outside the range of -30b to 2b. Regarding the y direction, in the analysis of Non Patent Literature 1, since an integration range in the y direction depends on a major axis radius a of a contact ellipse, there is a problem that the integration range changes depending on a load and a contact ellipse ratio. However, in the present embodiment, the integration range in the y direction is set to an axial width of the raceway surface, and is set to a constant region irrelevant to a size of the contact ellipse.

As in the following Equations (2) to (5), the rolling viscosity resistance is calculated separately for the contact portion and the non-contact portion, and is calculated by constructing different regression equations for the contact portion and the non-contact portion. In the analysis region, a rectangular region (range of -30b to 2b and ±a) sandwiched between two vertexes on the major axis side of the contact ellipse serves as a contact portion, and two rectangular regions sandwiching the contact portion from both axial sides serve as non-contact portions. By dividing the analysis range into the contact portion and the non-contact portion in this manner, there are advantages that an influence of shearing heat generation of the lubricating oil generated only around an entry of the contact point can be considered only in the contact portion, calculation can be performed even when the contact ellipse is not present at a center of the raceway surface, and the like. Note that, in the present embodiment, a sum of width dimensions of the contact portion and the two non-contact portions in the y direction is equal to a width dimension of the raceway surface. That is, the analysis range in the y direction coincides with the width dimension of the raceway surface.

[Mathematical Formula 2]

$$f_r = f_{r,c} + f_{r,nl} + f_{r,nr} \tag{2}$$

[Mathematical Formula 3]

$$f_{r,c} = \frac{1}{2} \int_{-a}^{a} \int_{-30b}^{2b} (h_\infty - h_c) \frac{\partial p}{\partial x} dx dy \tag{3}$$

[Mathematical Formula 4]

$$f_{r,nl} = f_{r,nc} = \frac{1}{2} \int_{-h_{left}}^{-a} \int_{-30b}^{2b} (h_\infty - h_c) \frac{\partial p}{\partial x} dx dy \tag{4}$$

[Mathematical Formula 5]

$$f_{r,nr} = f_{r,nc} = \frac{1}{2} \int_{a}^{l_{right}} \int_{-30b}^{2b} (h_\infty - h_c) \frac{\partial p}{\partial x} dx dy \tag{5}$$

In a case of applying the present invention to a ball bearing, particularly a ball bearing that rotates at a high speed with use of low-viscosity oil, an influence of heat generation due to shearing of the lubricating oil present at the contact portion and in the vicinity thereof increases, and thus the influence of the heat generation should be considered. Therefore, in such a case, it is preferable to multiply only fr,c by the thermal correction coefficient $\varphi_t$ as in the following Equation (6). The reason why "only fr,c" is that the shear heat generation of the lubricating oil is generated only around the entry of the contact portion. Details of the thermal correction coefficient $\varphi_t$ will be described later.

[Mathematical Formula 6]

$$f_{\mathrm{t}} = \phi_{\mathrm{t}} f_{\mathrm{r,c}} + f_{\mathrm{r,nl}} + f_{\mathrm{r,nr}} \qquad (6)$$

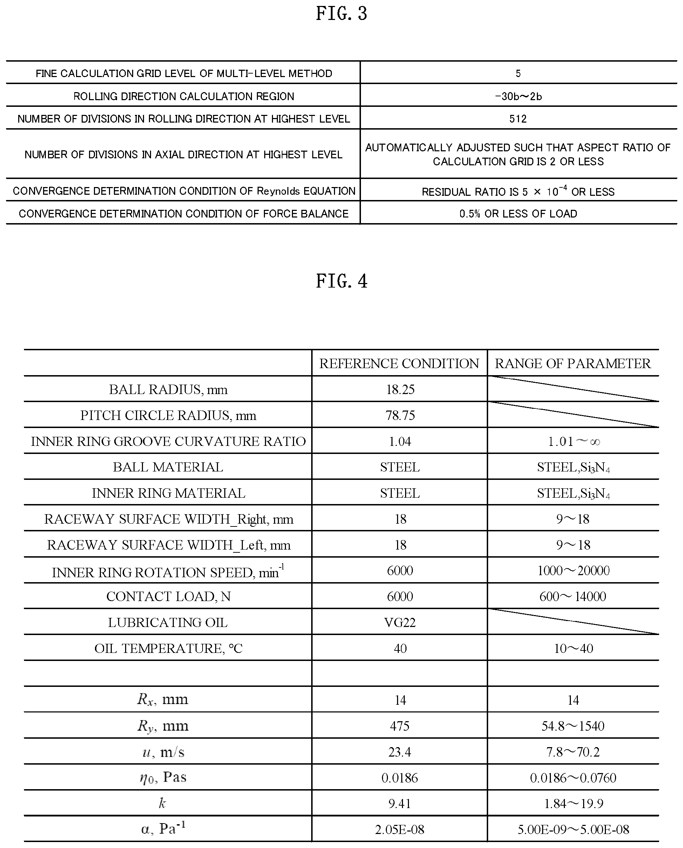

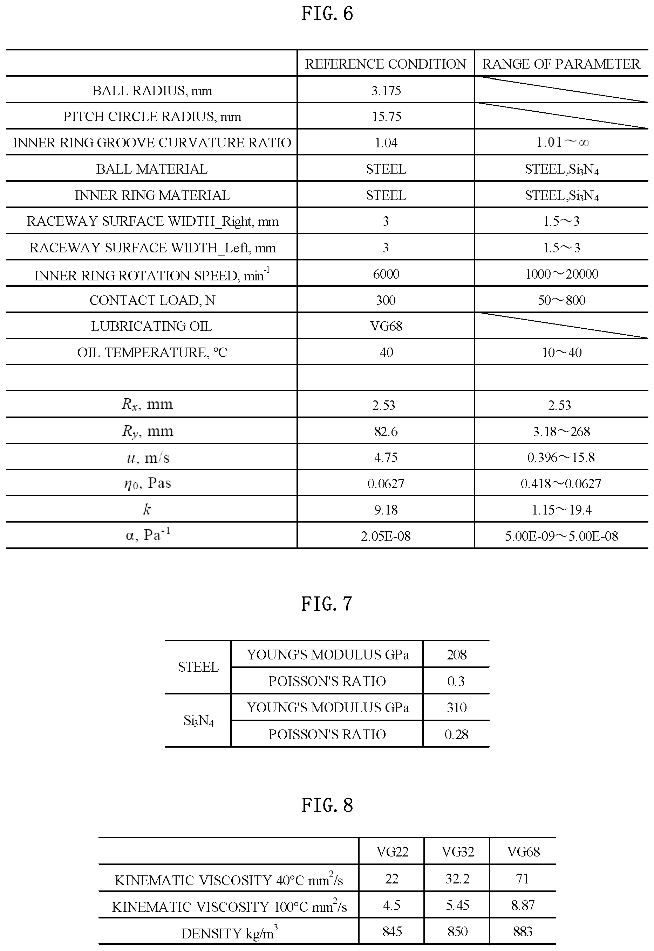

Hereinafter, numerical analysis (EHL analysis) of rolling viscosity resistance will be described. In this analysis, first, parameter study of rolling viscosity resistance has been performed under the calculation control parameters illustrated in FIG. 3. Calculation conditions are illustrated in FIGS. 4 to 6. Note that ball radii and pitch circle radii in FIGS. 4 to 6 correspond to bearing model numbers 6320, 6210, and 6004, respectively. Physical property values of materials and lubricating oil used for the calculation are illustrated in FIGS. 7 and 8.

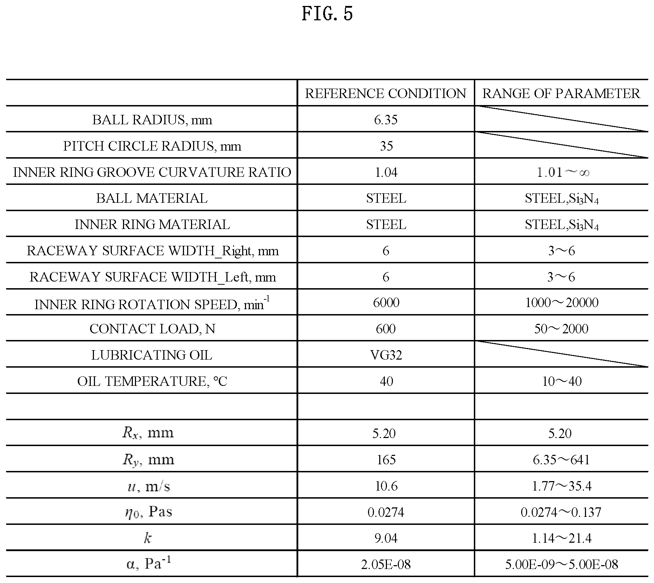

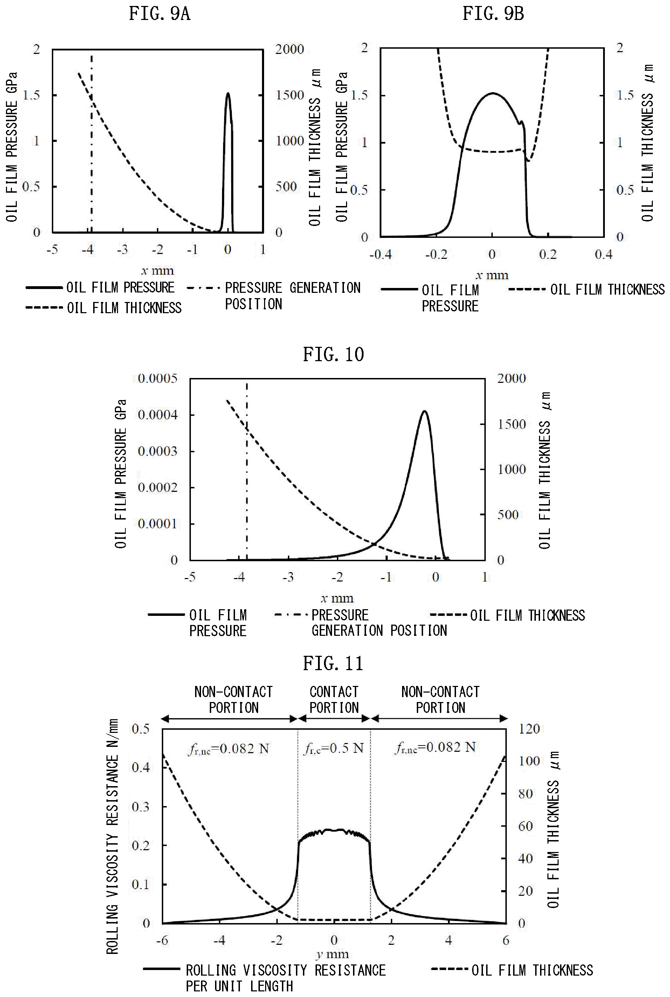

An oil film pressure, rolling viscosity resistance per unit length, and an oil film thickness distribution obtained by EHL analysis are illustrated in FIGS. 9A, 9B, 10, and 11. Calculation conditions are the "reference conditions" in FIG. 5. FIGS. 9A and 9B illustrate an oil film pressure and an oil film thickness distribution with y = 0 mm, and FIG. 10 illustrates an oil film pressure and an oil film thickness with y = 3 mm. y = 0 mm is a contact portion, and y = 3 mm is a non-contact portion. With y = 0 mm, a pressure spike, which is characteristics of EHL, and the presence of a minimum oil film thickness near an exit can be confirmed. Further, a pressure generation position where a pressure on the entry side becomes 0 is x = -3.89 mm. Since the pressure generation position is present in the analysis region, this calculation condition can be said to be analysis under sufficient lubrication, that is, analysis at a position where a calculated value of the rolling viscosity resistance no longer changes by setting the length on the entry side of the analysis region in the rolling direction to a certain value or more. With y = 3 mm, no pressure spike occurs, and a maximum position of the pressure is greatly moved to the entry side as compared to that of the contact portion. Therefore, with y = 3 mm, the pressure distribution under so-called fluid lubrication is obtained. In addition, the pressure generation position does not greatly change from that of the contact portion, but a maximum value of the oil film pressure is smaller than that of the contact portion.

FIG. 11 illustrates rolling viscosity resistance per unit length and an oil film thickness distribution with x = 0 mm. The rolling viscosity resistance per unit length is a value obtained by integrating shear stress due to a Poiseuille flow generated in each grid only in the rolling direction, and the rolling viscosity resistance in any range can be calculated by integrating the value in the axial direction. The rolling viscosity resistance distribution slightly fluctuates in the axial direction because an error occurs in calculation in the vicinity of the exit due to the number of divisions of the grid. However, since an amplitude is small and the rolling viscosity resistance of the entire calculation region is integrated in the axial direction, no problem has been considered, and the examination has been conducted in this state. Although the rolling viscosity resistance per unit length is greatly different between the contact portion and the non-contact portion, the rolling viscosity resistance of the contact portion and the rolling viscosity resistance of the entire non-contact portion are fr,c = 0.5 N and fr,nc = 0.082 × 2 = 0.164 N, respectively, and it has become clear that the rolling viscosity resistance of the non-contact portion cannot be ignored. Also in a deep groove ball bearing generally used in a motor and the like, a degree of a minimum gap of the non-contact portion is often the same as that of this calculation condition, so that it is necessary to consider the rolling viscosity resistance of the non-contact portion in torque calculation.

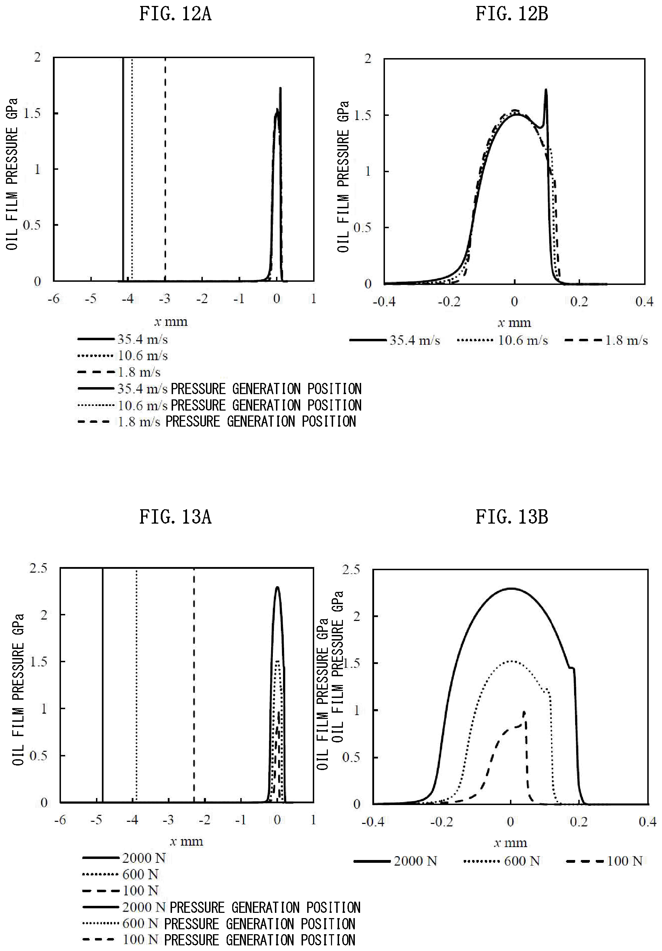

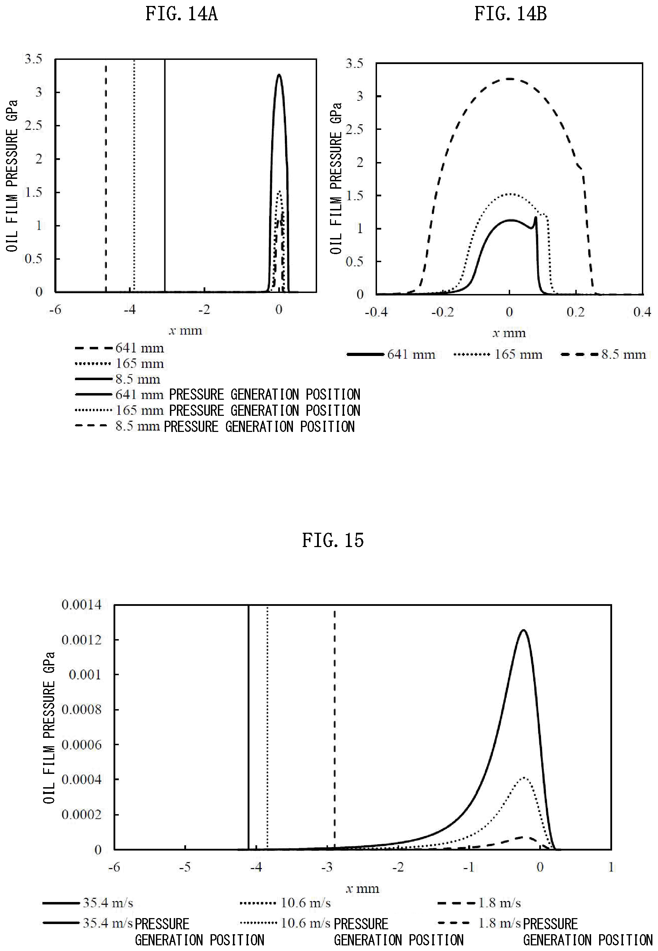

Changes in oil film pressure distribution and pressure generation position of the contact portion due to various parameter changes will be examined. In the calculation conditions, the average speed, the load, and the axial equivalent radius have been changed from the "reference conditions" in FIG. 5. FIGS. 12A and 12B illustrate changes in oil film pressure distribution and pressure generation position with y = 0 mm due to an average speed change, FIGS. 13A and 13B illustrate changes in oil film pressure distribution and pressure generation position with y = 0 mm due to a load change, and FIGS. 14A and 14B illustrate changes in oil film pressure distribution and pressure generation position with y = 0 mm due to an axial equivalent radius change. In the contact portion, a pressure generation position moves forward due to an increase in average speed and minor axis radius of the contact ellipse. In addition, in FIGS. 14A and 14B, if the minor axis radius of the contact ellipse is the same, lateral leakage of pressure is suppressed by increasing the contact ellipse ratio, and thus the pressure generation position is expected to move away. However, in the calculation conditions described above, since the surface pressure and the minor axis radius of the contact ellipse decrease due to the increase in axial equivalent radius, it is considered that the pressure generation position has moved closer as the axial equivalent radius increases.

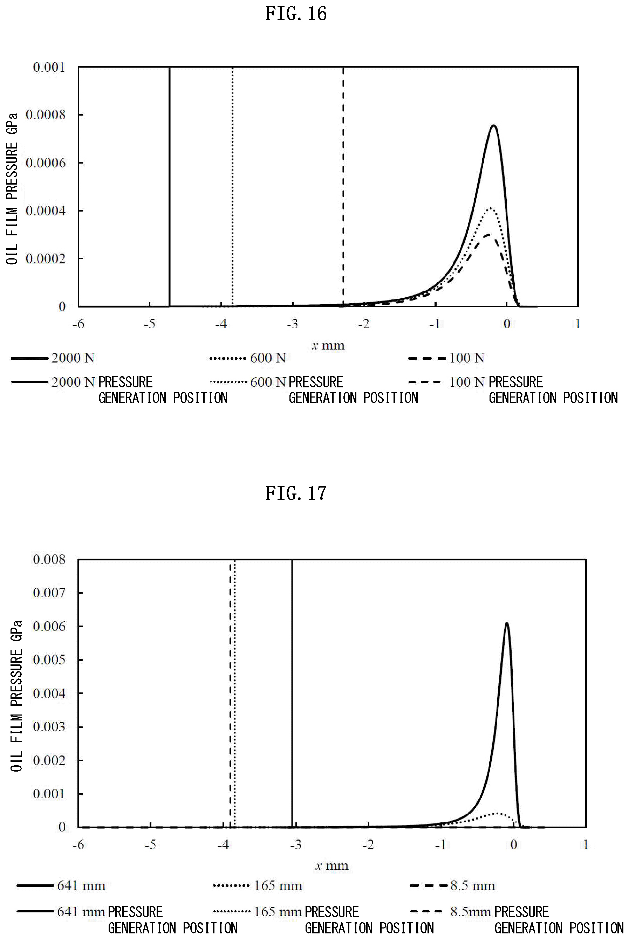

Next, changes in oil film pressure distribution and pressure generation position of the non-contact portion with y = 3 mm due to various parameter changes will be examined. Calculation conditions are conditions similar to those of the case of various parameter changes in the contact portion described above. FIGS. 15 to 17 illustrate changes in oil film pressure distribution and pressure generation position due to an average speed change, a load change, and an axial equivalent radius change. In the non-contact portion, an oil film pressure in the non-contact portion also increases due to the increase in average speed, and a pressure generation position moves away. In addition, as a minimum gap decreases due to an increase in load and axial equivalent radius, the oil film pressure increases. In addition, the pressure generation position has moved away due to the increase in load, and has moved closer due to the increase in axial equivalent radius. This is considered to be caused by various factors such as an increase in equivalent radius in the rolling direction with y = 3 mm due to the increase in axial equivalent radius, an influence of the pressure generation distance of the contact portion, and a relationship between the analysis region and the size of the contact ellipse.

Based on the analysis result above, a regression equation of the rolling viscosity resistance Fr,c of the contact portion is derived. As dimensionless numbers used in the regression equation of the rolling viscosity resistance Fr,c of the contact portion, the following Equations (7) to (9) are used.
[Mathematical Formula 7]

$$U = \frac{\eta_0 u}{E' R_x} \tag{7}$$

[Mathematical Formula 8]

$$W = \frac{w'}{E' R_x^2} \tag{8}$$

[Mathematical Formula 9]

$$G = \alpha E' \tag{9}$$

Further, the dimensionless rolling viscosity resistance Fr,c of the contact portion is expressed by Equation (10).
[Mathematical Formula 10]

$$F_{r,c} = \frac{f_{r,c}\alpha}{R_x^2} \tag{10}$$

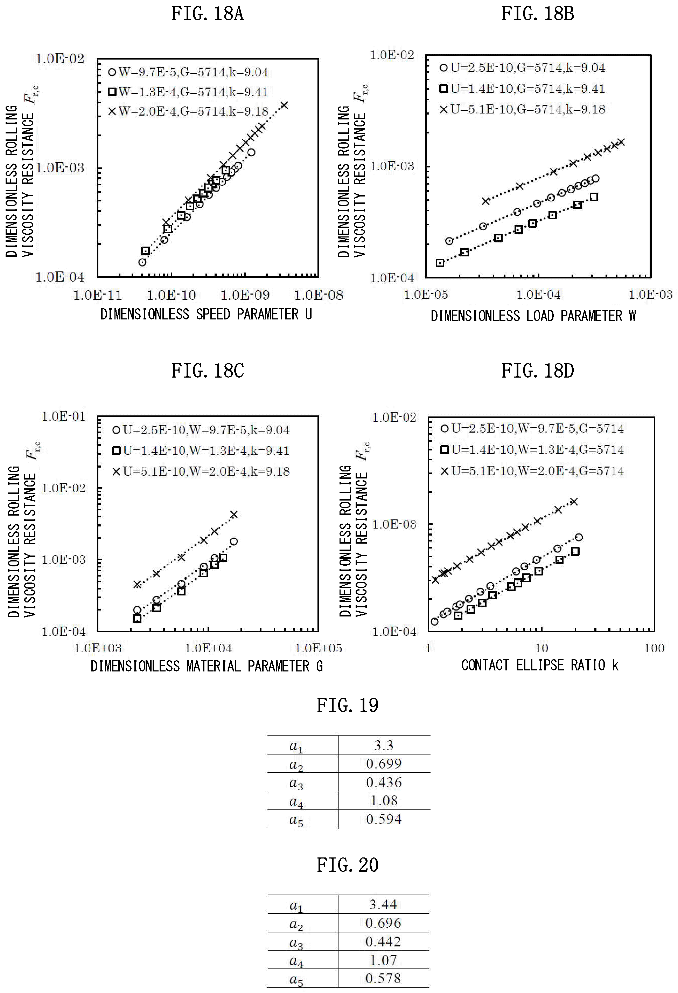

FIGS. 18A to 18D illustrate an influence of a dimensionless parameter on the dimensionless rolling viscosity resistance Fr,c of the contact portion. Plots are analysis values, and dotted lines are approximate lines. Fr,c is individually proportional to U to the power of 0.68 to 0.72, W to the power of 0.43 to 0.45, G to the power of 1.07 to 1.1, and $\kappa$ to the power of 0.57 to 0.6. From the above results, a regression equation of the dimensionless rolling viscosity resistance Fr,c of the contact portion is given as the following equation (11). Here, $a_1$ to as are constants.
[Mathematical Formula 11]

$$F_{r,c} = a_1 U^{a_2} G^{a_3} W^{a_4} k^{a_5} \tag{11}$$

A method for determining optimum values of the constants $a_1$ to as and the values thereof will be examined. In searching for the optimum values of the constants $a_1$ to $a_5$, it is necessary to provide appropriate initial values in advance. FIG. 19 illustrates initial values to be used for searching for optimum values of constants. The initial values have been determined using an approximation function of Microsoft Excel.

Hereinafter, an optimum value search algorithm for the constants $a_1$ to $a_5$ will be described.

(i) In a state where $a_2$ to $a_5$ are fixed, $a_1$ that minimizes a sum of squares of a difference between an analytical solution and a regression equation is searched for.
(ii) By using $a_1$ of (i) and $a_3$ to $a_5$, $a_2$ that minimizes a sum of squares of a difference between an analytical solution and a regression equation is searched for.
(iii) Similarly, $a_3$ to $a_5$ are searched for.
(iv) If a change rate of the sum of squares of the difference between the analytical solution and the regression equation has converged, the search ends. If the change rate has not converged, the search returns to (i).

As a result of searching for the optimum values of individual constants in this manner, constants as illustrated in FIG. 20 have been obtained. From the above, the regression equation of the rolling viscosity resistance Fr,c of the contact portion is expressed as Equation (12).
[Mathematical Formula 12]

$$F_{r,c} = 3.44 U^{0.696} G^{1.07} W^{0.442} k^{0.578} \tag{12}$$

Next, a regression equation of rolling viscosity resistance Fr,nc of the non-contact portion is derived. Dimensionless numbers used in the regression equation of the rolling viscosity resistance Fr,nc of the non-contact portion are shown in the following Equations (13) and (14).

[Mathematical Formula 13]

$$U' = \frac{\eta_0 u \alpha}{R_x} \tag{13}$$

[Mathematical Formula 14]

$$L = \frac{R_x \sqrt{R_x(1-a)}}{R_y^2} \tag{14}$$

Regarding the dimensionless speed parameter U', the non-contact portion has been determined to have an extremely small influence of the Young's modulus of the material, and the equivalent Young's modulus has been changed to the viscosity-pressure coefficient. The dimensionless shape parameter L is a parameter representing a size of a gap of a specific region in the non-contact portion. Since parameters that affect a shape of the non-contact portion are three parameters of a length 1-a of the non-contact portion, an equivalent radius $R_x$ in the rolling direction, and an equivalent radius $R_y$ in the axial direction, the dimensionless shape parameter L is determined as in Equation (14).

In addition, the dimensionless rolling viscosity resistance Fr,nc of the non-contact portion has been defined as in Equation (15).

[Mathematical Formula 15]

$$F_{r,nc} = \frac{f_{r,nc} \alpha}{R_y^2} \tag{15}$$

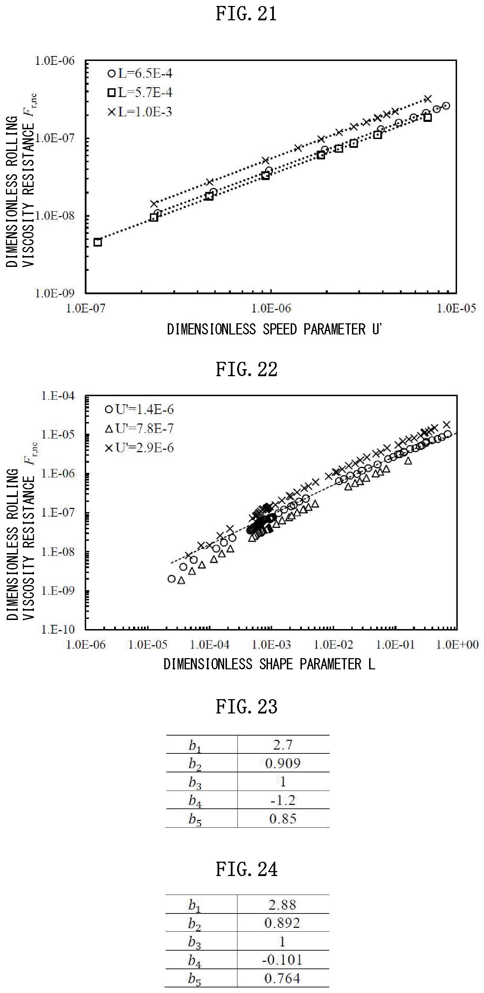

FIGS. 21 and 22 illustrate results of analyzing an influence of a dimensionless parameter on the dimensionless rolling viscosity resistance Fr,nc of the non-contact portion. Fr,nc is substantially proportional individually to U' to the power of 0.89 to 0.94 and L to the power of 0.78 to 0.83. In addition, even if there is a change in contact ellipse ratio, a load change, and a width change of the raceway surface under the calculation conditions illustrated in FIGS. 4 to 6, plots are present substantially on a straight line of each U'. Therefore, it can be seen that Fr,nc can be approximated only with U' and L, and the influence of the load and the surface pressure can be ignored. However, since an error between the analysis value and the approximate line may be large in the power approximation of L, an approximate expression with a smaller error has been examined. With expression using this approximate expression, the regression equation of the dimensionless rolling viscosity resistance Fr,nc is given as Equation (16). Here, $b_1$ to $b_5$ are constants. A dotted line in FIG. 22 is an approximate value using Equation (16) with U' = $7.8 \times 10^{-7}$, and an error seems to be slightly large in a case where L is small, but the absolute value thereof is very small. Therefore, it is considered that the error does not become large in torque calculation.

[Mathematical Formula 16]

$$F_{r,nc} = b_1 U'^{b_2} \left\{ 1 - b_3 \exp\left(-b_4 L^{b_5}\right) \right\} \tag{16}$$

A method for determining optimum values of the constants $b_1$ to $b_5$ and the values thereof will be examined. In searching for the optimum values of the constants $b_1$ to $b_5$, it is necessary to provide appropriate initial values in advance. FIG. 23 illustrates initial values to be used for searching for optimum values of constants. The initial values have been determined using an approximation function of Microsoft Excel.

The optimum values of the constants $b_1$ to $b_5$ are searched for with a method similar to that of the contact portion. Note that, in order to reduce errors of the constants and improve convergence, the constants have been searched in the order of $b_4 \rightarrow b_5 \rightarrow b_1 \rightarrow b_2 \rightarrow b_3$, unlike the contact portion. As a result of searching for the optimum values of the constants by the above method, constants as illustrated in FIG. 24 have been obtained. From the above, the regression equation of the rolling viscosity resistance Fr,nc of the non-contact portion is expressed as Equation (17). [Mathematical Formula 17]

$$F_{r,nc} = 2.88 U'^{0.892} \left\{ 1 - \exp\left(-1.01 L^{0.764}\right) \right\} \tag{17}$$

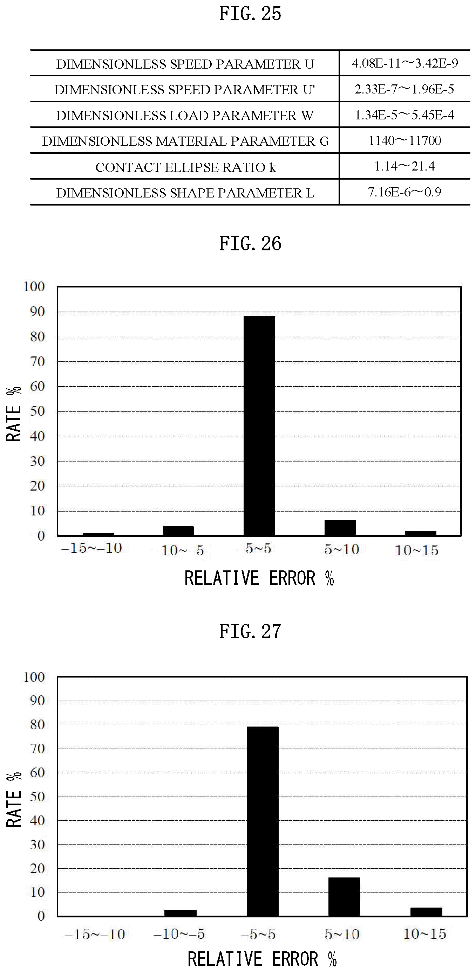

Based on the above description, the regression equation of the rolling viscosity resistance and the dimensionless numbers used are shown below. In addition, FIG. 25 illustrates use ranges of the dimensionless parameters of the regression equation constructed in the present embodiment.

· Dimensionless numbers used for Fr,c

[Mathematical Formula 18]

$$\text{Speed parameter: } U = \frac{\eta_0 u}{E' R_x}$$

[Mathematical Formula 19]

$$\text{Load parameter: } W = \frac{w'}{E' R_x^2}$$

[Mathematical Formula 20]

$$\text{Material parameter: } G = \alpha E'$$

[Mathematical Formula 21]

$$\text{Regression equation: } F_{r,c} = \frac{f_{r,c} \alpha}{R_x^2} = 3.44 U^{-0.696} G^{1.07} W^{-0.442} k^{-0.578}$$

· Dimensionless numbers used for Fr,nc

[Mathematical Formula 22]

$$\text{Speed parameter: } U' = \frac{\eta_0 u \alpha}{R_x}$$

[Mathematical Formula 23]

$$\text{Shape parameter: } L = \frac{R_x \sqrt{R_x (l - a)}}{R_y^2}$$

[Mathematical Formula 24]

$$\text{Regression equation: } F_{r,nc} = \frac{f_{r,nc} \alpha}{R_y^2} = 2.88 U'^{0.892} \left\{ 1 - \exp\left(-1.01 L^{0.764}\right) \right\}$$

When a nondimensionalization method for dimensionless rolling viscosity resistance is unified to Equation (10), and Equations (12) and (17) are summarized with taking Equation (15) taken into consideration, the regression equation of the dimensionless rolling viscosity resistance Fr,w in a width of any raceway surface is expressed by the following Equation (18). In Equation (18), a sum of values calculated based on the regression equation of the contact portion and the regression equation of the non-contact portion is set as an estimated value of the dimensionless rolling viscosity resistance Fr,w. Note that "the nondimensionalization method is unified to Equation (10)" described above means that the nondimensionalization method is unified such that the dimensional rolling viscosity resistance is made dimensionless by multiplying the dimensional rolling viscosity resistance by $\alpha/R_x^2$.

[Mathematical Formula 25]

$$F_{r,w} = F_{r,c} + F_{r,nl} + F_{r,nr} = \frac{\left(f_{r,c} + f_{r,nl} + f_{r,nr}\right)\alpha}{R_x^2}$$

$$= 3.44U'^{0.696}G^{1.07}H'^{0.442}k^{0.578} + 2.88U'^{0.892}\left(R_y / R_x\right)^2 \left\{2 - \exp\left(-1.01L_{left}^{0.764}\right) - \exp\left(-1.01L_{right}^{0.764}\right)\right\} \quad (18)$$

FIG. 26 illustrates a relative error distribution between an analysis value and a calculated value of Fr,c, and FIG. 27 illustrates a relative error distribution between an analysis value and a calculated value of Fr,w. The relative error is obtained as (calculated value - analysis value)/analysis value. A vertical axis represents an existence rate of the relative error under all analysis conditions. It can be understood that 90% or more of all analysis conditions exist within a relative error of 10% for both Fr,c, Fr,w, and accuracy is sufficient as a calculation formula.

A value of the rolling viscosity resistance Fr,w calculated from Equation (18) is an estimated value (dimensionless) of the rolling viscosity resistance of the rolling bearing. By multiplying the value of the dimensionless rolling viscosity resistance Fr,w by $R_x^2/\alpha$, the dimensional rolling viscosity resistance value ($f_{r,c} + f_{r,nl} + f_{r,nr}$) (unit N) of an actual bearing can be estimated ($f_{r,c} + f_{r,nl} + f_{r,nr} = F_{r,w} \times R_x^2/\alpha$).

In a case where total torque of the ball bearing 1 is calculated, bearing torque can be estimated with high accuracy by calculating a sum of the total torque and a bearing torque factor (traction, elastic hysteresis loss, and the like) other than the rolling viscosity resistance that is calculated separately.

In existing regression equations of rolling viscosity resistance including the equation of Non Patent Literature 1, an integration range is limited to a range of the major axis radius centered on the contact ellipse. As described above, since a considerable amount of the rolling viscosity resistance occurs not only in the contact portion but also in the non-contact portion, when the existing regression equation is used, a calculated value of the rolling viscosity resistance tends to deviate from a value of the actual bearing. On the other hand, in the present embodiment, the estimated value Fr,w of rolling viscosity resistance is calculated from the regression equation, in which the calculation range of the contact ellipse in the major axis direction is set to a length selected within a range exceeding the major axis radius of the contact ellipse and equal to or less than the axial equivalent radius. Therefore, the rolling viscosity resistance in the non-contact portion can also be included in the calculated value, and the estimated value of the rolling viscosity resistance can be brought close to the actual value.

If a rolling viscosity resistance equation is applied to torque calculation of a ball bearing, it is ideal to set an integration range in the y direction (the major axis direction of the contact ellipse) to be a raceway surface width of the bearing. In the present embodiment, the regression equation of the rolling viscosity resistance is defined for each of the contact portion and the non-contact portion, and a sum of values calculated based on the respective regression equations is used as the estimated value Fr,w of the rolling viscosity resistance of the rolling bearing. Therefore, it is possible to match the integration range with the raceway surface width of the bearing. As a result, it is possible to construct a calculation formula for obtaining rolling viscosity resistance with any raceway surface width as the calculation region, and it is possible to estimate the rolling viscosity resistance with high accuracy.

In a case where the temperature correction coefficient is considered as described above, an equation obtained by multiplying the regression equation of the contact portion by the temperature correction coefficient $\varphi_t$ in Equation (18) is used as follows.

[Mathematical Formula 27]

$$F_{r,w} = \varphi_t \times 3.44U'^{0.696}G^{1.07}H'^{0.442}k^{0.578} + 2.88U'^{0.892}\left(R_y / R_x\right)^2 \left\{2 - \exp\left(-1.01L_{left}^{0.764}\right) - \exp\left(-1.01L_{right}^{0.764}\right)\right\}$$

As the temperature correction coefficient $\varphi_t$, various known formulas can be used. For example, the following temperature correction coefficient $\varphi_t$ (Mihir K. Ghosh, Raj K. Pandey, "Thermal Elastohydrodynamic Lubrication of Heavily Loaded Line Contacts - An Efficient Inlet Zone Analysis") can be used.

[Mathematical Formula 28]

$$\varphi_t = \frac{1.0}{[1.0 + 1.6W^{0.152}Q^{0.379}(1.0 + 3.96S^{0.96})]}$$

Note that, in the above formula, W represents a dimensionless load parameter, Q represents a thermal load parameter, and S represents a sliding parameter.

The estimation of the rolling viscosity resistance described above can be performed inside a system (or a device). As such a system, for example, a system including the following is assumed: a calculation unit that calculates an estimated value Fr,w of rolling viscosity resistance from a regression equation, in which a calculation range of a contact ellipse in a major axis direction is set to a length selected within a range exceeding a major axis radius of a contact ellipse and equal to or less than an axial equivalent radius; and an output unit that outputs the estimated value Fr,w. As the calculation unit, for example, a CPU or the like built in a computer can be used. The output unit includes, in addition to a display that displays a calculation result, an output interface for transmitting an output signal to an external device such as a display, and the like.

In this system for estimating rolling viscosity resistance, a regression equation of rolling viscosity resistance is determined for each of a contact portion and a non-contact portion, and a sum of values calculated based on the respective regression equations is used as the estimated value Fr,w of rolling viscosity resistance of a rolling bearing. This processing can be performed by the calculation unit.

Further, the estimation of the rolling viscosity resistance described above can also be executed by a computer that has read a program. In this case, the program causes the computer to execute: processing of calculating an estimated value Fr,w of rolling viscosity resistance from a regression equation, in which a calculation range of a contact ellipse in a major axis direction is set to a length selected within a range exceeding a major axis radius of the contact ellipse and equal to or less than an axial equivalent radius; and processing of outputting the estimated value Fr,w.

This program can cause execution of processing of determining a regression equation of rolling viscosity resistance for each of a contact portion and a non-contact portion, and setting a sum of values calculated based on the respective regression equations as the estimated value Fr,w of rolling viscosity resistance of a rolling bearing.

In both the system and the program for estimating rolling viscosity resistance, the estimated value Fr,w can be calculated from Equation (18). The estimated value Fr,w can also be calculated from an equation obtained by multiplying the regression equation of the contact portion by a thermal correction coefficient.

In the above description, the method for estimating rolling viscosity resistance has been described with the ball bearing taken as an example, but the method can be widely applied to a rolling bearing in which a raceway surface and a rolling element are in point contact, and can also be applied to, for example, a self-aligning roller bearing in addition to the ball bearing.

REFERENCE SIGNS LIST

1　　Rolling bearing (ball bearing)
11　　Inner ring
11a　　Inner-ring raceway surface
12　　Outer ring
12a　　Outer-ring raceway surface
13　　Rolling element (ball)
14　　Retainer

**Claims**

1. A method for estimating rolling viscosity resistance of a rolling bearing including a raceway surface and a rolling element that rolls on the raceway surface, the rolling bearing including: a contact portion where the raceway surface and the rolling element are in point contact with each other, an oil film is formed at a portion of the point contact, and the raceway surface is in contact with the rolling element; and a non-contact portion that is not in contact with the rolling element, the method comprising
calculating an estimated value Fr,w of rolling viscosity resistance from a regression equation, in which a calculation range of a contact ellipse in a major axis direction is set to a length selected within a range exceeding a major axis radius of a contact ellipse and equal to or less than an axial equivalent radius.

2. The method for estimating rolling viscosity resistance according to claim 1, wherein a regression equation of rolling viscosity resistance is determined for each of the contact portion and the non-contact portion, and a sum of values calculated based on respective regression equations is used as an estimated value Fr,w of rolling viscosity resistance of the rolling bearing.

3. The method for estimating rolling viscosity resistance according to claim 2, wherein the estimated value Fr,w is calculated from an equation below:

[Mathematical Formula 26]

$$F_{r,w} = 3.44 U^{0.696} G^{1.07} W^{0.442} k^{0.578} + 2.88 U'^{0.892} \left( R_y / R_x \right)^2 \left\{ 2 - \exp\left(-1.01 L_{left}^{0.764}\right) - \exp\left(-1.01 L_{right}^{0.764}\right) \right\}$$

where,
[Mathematical Formula 7]

$$U = \frac{\eta_0 u}{E' R_x} \qquad (7)$$

[Mathematical Formula 8]

$$W = \frac{w}{E' R_x^2} \qquad (8)$$

[Mathematical Formula 9]

$$G = \alpha E' \qquad (9)$$

[Mathematical Formula 13]

$$U' = \frac{\eta_0 u \alpha}{R_x} \qquad (13)$$

[Mathematical Formula 14]

$$L = \frac{R_x \sqrt{R_x (1 - a)}}{R_y^2} \qquad (14)$$

where $\eta_0$ represents a normal pressure viscosity [Pa·s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

4. The method for estimating rolling viscosity resistance of the rolling bearing according to claim 3, wherein a regression equation of the contact portion is multiplied by a thermal correction coefficient.

5. A system for estimating rolling viscosity resistance of a rolling bearing including a raceway surface and a rolling element that rolls on the raceway surface, the rolling bearing including: a contact portion where the raceway surface and the rolling element are in point contact with each other, an oil film is formed at a portion of the point contact, and the raceway surface is in contact with the rolling element; and a non-contact portion that is not in contact with the rolling element, the system comprising:

a calculation unit configured to calculate an estimated value Fr,w of rolling viscosity resistance from a regression equation, in which a calculation range of a contact ellipse in a major axis direction is set to a length selected within a range exceeding a major axis radius of a contact ellipse and equal to or less than an axial equivalent radius; and an output unit configured to output the estimated value Fr,w.

6. The system for estimating rolling viscosity resistance according to claim 5, wherein a regression equation of rolling viscosity resistance is determined for each of the contact portion and the non-contact portion, and a sum of values calculated based on respective regression equations is used as an estimated value Fr,w of rolling viscosity resistance of the rolling bearing.

7. The system for estimating rolling viscosity resistance according to claim 6, wherein the estimated value Fr,w is calculated from an equation below:

[Mathematical Formula 26]

$$F_{r,w} = 3.44 U^{0.696} G^{1.07} W^{0.442} k^{0.578} + 2.88 U'^{0.892} \left( R_y / R_x \right)^2 \left\{ 2 - \exp\left( -1.01 L_{\text{left}}^{0.764} \right) - \exp\left( -1.01 L_{\text{right}}^{0.764} \right) \right\}$$

where, [Mathematical Formula 7]

$$U = \frac{\eta_0 u}{E' R_x} \qquad\qquad (7)$$

[Mathematical Formula 8]

$$W = \frac{w}{E' R_x^2} \qquad\qquad (8)$$

[Mathematical Formula 9]

$$G = \alpha E' \qquad\qquad (9)$$

[Mathematical Formula 13]

$$U' = \frac{\eta_0 u \alpha}{R_x} \qquad\qquad (13)$$

[Mathematical Formula 14]

$$L = \frac{R_x \sqrt{R_x \left( 1 - a \right)}}{R_y^2} \qquad\qquad (14)$$

where $\eta_0$ represents a normal pressure viscosity [Pa·s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

8. The system for estimating rolling viscosity resistance according to claim 7, wherein a regression equation of the contact portion is multiplied by a thermal correction coefficient.

9. A program for estimating rolling viscosity resistance of a rolling bearing including a raceway surface and a rolling element that rolls on the raceway surface, the rolling bearing including: a contact portion where the raceway surface and the rolling element are in point contact with each other, an oil film is formed at a portion of the point contact, and the raceway surface is in contact with the rolling element; and a non-contact portion that is not in contact with the rolling element,
the program causing a computer to execute:

processing of calculating an estimated value Fr,w of rolling viscosity resistance from a regression equation, in which a calculation range of a contact ellipse in a major axis direction is set to a length selected within a range exceeding a major axis radius of a contact ellipse and equal to or less than an axial equivalent radius; and processing of outputting the estimated value Fr,w.

10. The program for estimating rolling viscosity resistance according to claim 9, wherein a regression equation of rolling viscosity resistance is determined for each of the contact portion and the non-contact portion, and a sum of values calculated based on respective regression equations is used as an estimated value Fr,w of rolling viscosity resistance of the rolling bearing.

11. The program for estimating rolling viscosity resistance according to claim 10, wherein the estimated value Fr,w is calculated from an equation below:

[Mathematical Formula 26]

$$F_{\mathrm{r,w}} = 3.44 U^{0.696} G^{1.07} W^{0.442} k^{0.578} + 2.88 U'^{0.892} \left( R_y / R_x \right)^2 \left\{ 2 - \exp\left(-1.01 L_{\mathrm{left}}^{0.764}\right) - \exp\left(-1.01 L_{\mathrm{right}}^{0.764}\right) \right\}$$

where,
[Mathematical Formula 7]

$$U = \frac{\eta_0 u}{E' R_x} \qquad (7)$$

[Mathematical Formula 8]

$$W = \frac{w}{E' R_x^2} \qquad (8)$$

[Mathematical Formula 9]

$$G = \alpha E' \qquad (9)$$

[Mathematical Formula 13]

$$U' = \frac{\eta_0 u \alpha}{R_x} \qquad (13)$$

[Mathematical Formula 14]

$$L = \frac{R_x \sqrt{R_x (1 - a)}}{R_y^2} \qquad (14)$$

where $\eta_0$ represents a normal pressure viscosity [Pa·s] of lubricating oil, u represents an average speed [m/s], E' represents an equivalent Young's modulus [Pa], w represents a load [N], $\alpha$ represents a viscosity-pressure coefficient [Pa$^{-1}$], $R_x$ represents an equivalent radius [m] in an x direction, $R_y$ represents an equivalent radius [m] in a y direction, 1 represents a distance [m] in the y direction from a center of a contact ellipse to an end of an analysis region, and a represents a major axis radius [m] of the contact ellipse.

12. The program for estimating rolling viscosity resistance according to claim 11, wherein a regression equation of the contact portion is multiplied by a thermal correction coefficient.

13. A computer-readable recording medium in which the program for estimating rolling viscosity resistance according to any one of claims 9 to 12 is recorded.

FIG. 1

FIG. 2

## FIG. 3

| | |
|---|---|
| FINE CALCULATION GRID LEVEL OF MULTI-LEVEL METHOD | 5 |
| ROLLING DIRECTION CALCULATION REGION | −30b〜2b |
| NUMBER OF DIVISIONS IN ROLLING DIRECTION AT HIGHEST LEVEL | 512 |
| NUMBER OF DIVISIONS IN AXIAL DIRECTION AT HIGHEST LEVEL | AUTOMATICALLY ADJUSTED SUCH THAT ASPECT RATIO OF CALCULATION GRID IS 2 OR LESS |
| CONVERGENCE DETERMINATION CONDITION OF Reynolds EQUATION | RESIDUAL RATIO IS $5 \times 10^{-4}$ OR LESS |
| CONVERGENCE DETERMINATION CONDITION OF FORCE BALANCE | 0.5% OR LESS OF LOAD |

## FIG. 4

| | REFERENCE CONDITION | RANGE OF PARAMETER |
|---|---|---|
| BALL RADIUS, mm | 18.25 | |
| PITCH CIRCLE RADIUS, mm | 78.75 | |
| INNER RING GROOVE CURVATURE RATIO | 1.04 | $1.01〜\infty$ |
| BALL MATERIAL | STEEL | STEEL,$Si_3N_4$ |
| INNER RING MATERIAL | STEEL | STEEL,$Si_3N_4$ |
| RACEWAY SURFACE WIDTH_Right, mm | 18 | 9〜18 |
| RACEWAY SURFACE WIDTH_Left, mm | 18 | 9〜18 |
| INNER RING ROTATION SPEED, $min^{-1}$ | 6000 | 1000〜20000 |
| CONTACT LOAD, N | 6000 | 600〜14000 |
| LUBRICATING OIL | VG22 | |
| OIL TEMPERATURE, °C | 40 | 10〜40 |
| | | |
| $R_x$, mm | 14 | 14 |
| $R_y$, mm | 475 | 54.8〜1540 |
| $u$, m/s | 23.4 | 7.8〜70.2 |
| $\eta_0$, Pas | 0.0186 | 0.0186〜0.0760 |
| $k$ | 9.41 | 1.84〜19.9 |
| $\alpha$, $Pa^{-1}$ | 2.05E-08 | 5.00E-09〜5.00E-08 |

FIG. 5

|  | REFERENCE CONDITION | RANGE OF PARAMETER |
|---|---|---|
| BALL RADIUS, mm | 6.35 |  |
| PITCH CIRCLE RADIUS, mm | 35 |  |
| INNER RING GROOVE CURVATURE RATIO | 1.04 | $1.01 \sim \infty$ |
| BALL MATERIAL | STEEL | STEEL,$Si_3N_4$ |
| INNER RING MATERIAL | STEEL | STEEL,$Si_3N_4$ |
| RACEWAY SURFACE WIDTH_Right, mm | 6 | $3 \sim 6$ |
| RACEWAY SURFACE WIDTH_Left, mm | 6 | $3 \sim 6$ |
| INNER RING ROTATION SPEED, $min^{-1}$ | 6000 | $1000 \sim 20000$ |
| CONTACT LOAD, N | 600 | $50 \sim 2000$ |
| LUBRICATING OIL | VG32 |  |
| OIL TEMPERATURE, ℃ | 40 | $10 \sim 40$ |
|  |  |  |
| $R_x$, mm | 5.20 | 5.20 |
| $R_y$, mm | 165 | $6.35 \sim 641$ |
| $u$, m/s | 10.6 | $1.77 \sim 35.4$ |
| $\eta_0$, Pas | 0.0274 | $0.0274 \sim 0.137$ |
| $k$ | 9.04 | $1.14 \sim 21.4$ |
| $\alpha$, $Pa^{-1}$ | 2.05E-08 | 5.00E-09$\sim$5.00E-08 |

## FIG. 6

|  | REFERENCE CONDITION | RANGE OF PARAMETER |
|---|---|---|
| BALL RADIUS, mm | 3.175 | |
| PITCH CIRCLE RADIUS, mm | 15.75 | |
| INNER RING GROOVE CURVATURE RATIO | 1.04 | $1.01\sim\infty$ |
| BALL MATERIAL | STEEL | STEEL,$Si_3N_4$ |
| INNER RING MATERIAL | STEEL | STEEL,$Si_3N_4$ |
| RACEWAY SURFACE WIDTH_Right, mm | 3 | $1.5\sim3$ |
| RACEWAY SURFACE WIDTH_Left, mm | 3 | $1.5\sim3$ |
| INNER RING ROTATION SPEED, $min^{-1}$ | 6000 | $1000\sim20000$ |
| CONTACT LOAD, N | 300 | $50\sim800$ |
| LUBRICATING OIL | VG68 | |
| OIL TEMPERATURE, °C | 40 | $10\sim40$ |
|  |  |  |
| $R_x$, mm | 2.53 | 2.53 |
| $R_y$, mm | 82.6 | $3.18\sim268$ |
| $u$, m/s | 4.75 | $0.396\sim15.8$ |
| $\eta_0$, Pas | 0.0627 | $0.418\sim0.0627$ |
| $k$ | 9.18 | $1.15\sim19.4$ |
| $\alpha$, $Pa^{-1}$ | 2.05E-08 | $5.00E-09\sim5.00E-08$ |

## FIG. 7

| STEEL | YOUNG'S MODULUS GPa | 208 |
|---|---|---|
|  | POISSON'S RATIO | 0.3 |
| $Si_3N_4$ | YOUNG'S MODULUS GPa | 310 |
|  | POISSON'S RATIO | 0.28 |

## FIG. 8

|  | VG22 | VG32 | VG68 |
|---|---|---|---|
| KINEMATIC VISCOSITY 40°C $mm^2/s$ | 22 | 32.2 | 71 |
| KINEMATIC VISCOSITY 100°C $mm^2/s$ | 4.5 | 5.45 | 8.87 |
| DENSITY $kg/m^3$ | 845 | 850 | 883 |

FIG. 9A

FIG. 9B

FIG. 10

FIG. 11

FIG. 12A

FIG. 12B

FIG. 13A

FIG. 13B

FIG. 14A

FIG. 14B

FIG. 15

## FIG. 16

## FIG. 17

## FIG. 18A

## FIG. 18B

## FIG. 18C

## FIG. 18D

## FIG. 19

| | |
|---|---|
| $a_1$ | 3.3 |
| $a_2$ | 0.699 |
| $a_3$ | 0.436 |
| $a_4$ | 1.08 |
| $a_5$ | 0.594 |

## FIG. 20

| | |
|---|---|
| $a_1$ | 3.44 |
| $a_2$ | 0.696 |
| $a_3$ | 0.442 |
| $a_4$ | 1.07 |
| $a_5$ | 0.578 |

## FIG. 21

## FIG. 22

## FIG. 23

| | |
|---|---|
| $b_1$ | 2.7 |
| $b_2$ | 0.909 |
| $b_3$ | 1 |
| $b_4$ | -1.2 |
| $b_5$ | 0.85 |

## FIG. 24

| | |
|---|---|
| $b_1$ | 2.88 |
| $b_2$ | 0.892 |
| $b_3$ | 1 |
| $b_4$ | -0.101 |
| $b_5$ | 0.764 |

## FIG. 25

| DIMENSIONLESS SPEED PARAMETER U | 4.08E-11～3.42E-9 |
|---|---|
| DIMENSIONLESS SPEED PARAMETER U' | 2.33E-7～1.96E-5 |
| DIMENSIONLESS LOAD PARAMETER W | 1.34E-5～5.45E-4 |
| DIMENSIONLESS MATERIAL PARAMETER G | 1140～11700 |
| CONTACT ELLIPSE RATIO k | 1.14～21.4 |
| DIMENSIONLESS SHAPE PARAMETER L | 7.16E-6～0.9 |

## FIG. 26

## FIG. 27

## INTERNATIONAL SEARCH REPORT

| International application No. |
| --- |
| **PCT/JP2024/024199** |

### A. CLASSIFICATION OF SUBJECT MATTER

*G01M 13/04*(2019.01)i; *F16C 19/06*(2006.01)i; *F16C 19/52*(2006.01)i
FI:   G01M13/04; F16C19/06; F16C19/52

According to International Patent Classification (IPC) or to both national classification and IPC

### B. FIELDS SEARCHED

Minimum documentation searched (classification system followed by classification symbols)

G01M13/04; F16C19/06; F16C19/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-042052 A (NTN CORPORATION) 31 March 2016 (2016-03-31) paragraphs [0026]-[0033] | 1-13 |
| A | BALAN, Mihaela Rodica D. et al. Rolling Friction Torque in Ball-Race Contacts Operating in Mixed Lubrication Condition. lubricants. 13 April 2015, vol. 2015, no. 3, pp. 222-243, https://doi.org/10.3390/lubricants3020222 in particular, see column "2." | 1-13 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 August 2024** | **20 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/024199**

| Patent document cited in search report | Publication date (day/month/year) | Patent family member(s) | Publication date (day/month/year) |
|---|---|---|---|
| JP 2016-042052 A | 31 March 2016 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. BIBOULET** ; **L. HOUPERT**. Hydrodynamic force and moment in pure rolling lubricated contacts. Part 1: point contacts. *J. Eng. Tribol*, 2010, vol. 224 (8), 777-788